# EUROPEAN PATENT APPLICATION

(11) **EP 2 431 888 A1**
(43) Date of publication of application: **21.03.2012**
(21) Application number: 09844379.9
(22) Date of filing: 10.07.2009
(51) Int. Cl.: G06F 17/30

(54) **SYSTEM AND METHOD FOR SEMANTIC SERVICE**

(30) Priority: 07.05.2009 KR 20090039771
(71) Applicant: Korea Institute of Science & Technology Information, Daejeon 305-333 (KR)
(72) Inventor: JUNG, Han Min, Daejeon 305-806 (KR); KIM, Pyung, Daejeon 305-150 (KR); LEE, Seung Woo, Daejeon 302-181 (KR); LEE, Mi Kyung, Daejeon 305-340 (KR); YOU, Beom Jong, Daejeon 305-301 (KR)
(74) Representative: Collin, Jérôme
(86) International application number: PCT/KR2009/003806
(87) International publication number: WO 2010/128712

(57) **Abstract**

The present invention relates to a system and a method for a semantic service for registering and managing semantic services by collecting the semantic services that are distributed among a plurality of service servers, and combining the plurality of semantic services to be matched with a condition set by a user, comprising: a semantic service management server which registers, deletes, and edits the ontology and ontology-based semantic service information, and supports an information searching function performed by a semantic broker server; the semantic broker server which searches and combines semantic services through the semantic service management server, and provides the results with one of the combined semantic services or semantic workflows; and a semantic service license server which requests the results by transmitting the corresponding condition to the semantic broker server when the user inputs the condition as well as an input factor according to the preset items, and receives and outputs the corresponding results. The following effects can be anticipated from the present invention: the user is able to freely search and select the ontology to combine the ontology-based semantic services, and the semantic services are automatically combined based on the ontology; and an interface is provided through which the user can interact with the combined semantic services or semantic workflows.

## Description

### [Technical Field]

The present invention relates to a semantic service system and method and, more particularly, to a semantic service system and method for collecting semantic services distributed among a plurality of service servers, registering and managing the collected semantic services, and combining a plurality of the semantic services to be matched with a condition set by a user.

### [Background Art]

Web service is a method of providing service using a standard protocol on the web and is commonly used when web applications are constructed. A search Application Programming Interface (API) or an API executing a specific command widely adopts the web service method.

With the development of the Internet, APIs adopting web service are increased, and services using the API are further increased.

Accordingly, the creation of new services through web service combinations is emerging as an important issue. This is because services created through the web service combinations have great costs versus effects as compared with services newly constructed.

A task of finding a proper combination based on web services where a web service combination is described in a syntactic way becomes static, or the task has limitation to dependency on a manual task.

In order to overcome this, there has recently been made an attempt to access a web service description, such as OWL-S, in a semantic way using OWL through standardization organizations, such as W3C.

There is, however, also a limit to the attempt. This is because the subject of the description itself is not semantic service, but common web service.

In other words, there is not proposed a method of intelligently attempting a web service combination because semantic service providing a search API or a reasoning API based on ontology is not taken into consideration.

Consequently, there is an urgent need for technical support for creating new semantic service through a combination of ontology-based semantic services that are expected to abruptly increase in the future, but there is no method of supporting the urgent need using the prior art.

### [Disclosure]

### [Technical Problem]

The present invention has been made in view of the above problems occurring in the prior art, and an object of the present invention is to provide a semantic service system and method for providing an interface through which a user can freely search and select ontology, automatically combine semantic services based on the ontology, and interact with combined semantic services or semantic workflows in order to combine ontology-based semantic services.

Another object of the present invention is to provide a semantic service management server for registering and managing semantic services.

Yet another object of the present invention is to provide an interface which can support reference to an integrated ontology when pieces of distributed ontology are registered and integrated and semantic services are registered, deleted, and edited.

Further yet another object of the present invention is to provide a semantic service system for searching for suitable semantic service based on information set by a user.

### [Technical Solution]

To achieve the above objects, a semantic service system of the present invention comprises a semantic service management server for registering, deleting, and editing pieces of ontology-based semantic service information and ontology and supporting information search performed by a semantic broker server;

a semantic broker server for searching for and combining semantic services through the semantic service management server and providing a result as any one of a combined semantic service or a semantic workflow; and

a semantic service license server for requesting a result by transmitting a condition, including an input factor, to the semantic broker server when a user inputs the input factor according to a preset item, receiving the relevant result from the semantic broker server, and outputting the relevant result.

It is preferred that the semantic service management server comprise:

a semantic service management unit for collecting the pieces of ontology-based semantic service information and ontology from a plurality of service servers, registering the pieces of ontology-based semantic service information and ontology with a semantic service repository or an ontology integration management unit, and managing the pieces of ontology-based semantic service information and ontology;

an ontology integration management unit for registering and integrating the pieces of ontology, distributed among the respective service servers and collected by the semantic service management unit, supporting reference to the integrated ontology when the semantic services are registered, deleted, and edited, and supporting the information search of the semantic broker server; and

a semantic service repository for storing the pieces of semantic service information collected by the semantic service management unit and supporting the search of the semantic broker server.

It is preferred that the semantic service management unit further collect ontology reference Application Programming Interfaces (APIs),

the ontology integration management unit comprise

an additional repository for an ontology reference API,

store the ontology reference API in the additional repository if the ontology reference API exists, and

store relevant instance information itself if the ontology reference API does not exist.

It is preferred that the semantic service information comprise

comprise a semantic service name, an input item, an output item, a property, a visualization type, reference ontology, and a service specification.

It is preferred that the semantic service management server further comprise

an interface unit for providing an interface so that the user can manipulate the semantic service management server, comprising the semantic service management unit, the ontology integration management unit, and the semantic service repository.

It is preferred that the semantic service license server comprise

a semantic service condition input unit for providing service so that the condition can be inputted according to preset essential items and optional items; and

a semantic service result output unit for requesting the result, matched with the condition inputted by the semantic service condition input unit, by transmitting the condition to the semantic broker server, receiving the result from the semantic broker server, and outputting the result.

It is preferred that the semantic service license server further comprise

an interface unit for enabling information, including a specific condition, to be inputted to the semantic service license server including the semantic service condition input unit and the semantic service result output unit and for enabling the information to be requested and received through the semantic service management server and the semantic broker server.

It is preferred that the semantic service condition input unit

request ontology information from the semantic broker server before outputting items for inputting the condition, receives the ontology information from the semantic broker server, and incorporates the received ontology information into the items.

It is preferred that the essential item be items for inputting an input factor and an output factor.

It is preferred that the optional items comprise at least one or more of a visualization type, a semantic service, and a property.

It is preferred that the visualization type comprise

any one of a graph form, a group form, a grid form, a list form, a map form, a browsing form, a tag cloud form, and a tree form.

It is preferred that, when the condition is received from the semantic service license server, the semantic broker server

transmit the condition to the semantic service management server, receives semantic services matched with the condition, generate semantic service pipelines by combining the received semantic services, and transmit the semantic service pipelines to the semantic service license server.

Another aspect of the present invention provides a semantic service method of a system, comprising a semantic service management server, a semantic broker server, and a semantic service license server, providing ontology-based semantic services, the semantic service method comprising the steps of:

a) the semantic service license server outputting preset items so that an input factor is inputted and requesting classes and instances matched with an input factor inputted by a user by transmitting the input factor to the semantic broker server;

b) the semantic broker server requesting class and instance information, matched with the input factor, from the semantic service management server when the request is received from the semantic service license server, receiving the class and instance information from the semantic service management server, and transmitting the received class and instance information to the semantic service license server;

c) the semantic service license server outputting the preset items so that an output factor is inputted and requesting a result matched with a condition, including the input factor and the output factor, by transmitting the condition to the semantic broker server;

d) the semantic broker server requesting semantic service information, matched with the condition, from the semantic service management server, receiving the semantic service information from the semantic service management server, generating semantic service pipelines based on the received semantic service information, and transmitting the semantic service pipelines to the semantic service license server;

e) the semantic service license server outputting the semantic service pipelines received from the semantic broker server so that the user can check the semantic service pipelines and requesting the semantic broker server to execute a semantic service pipeline selected by the user;

f) the semantic broker server receiving an API of the semantic service pipeline, requested to be executed by the semantic service license server, from the relevant service server by calling the API and transmitting a relevant result to the semantic service license server; and

g) the semantic service license server outputting the relevant result received from the semantic broker server.

It is preferred that the semantic service method further comprise

the step of the semantic service management server collecting pieces of ontology-based semantic service information and ontology distributed among a plurality of service servers and registering the pieces of ontology-based semantic service information and ontology, before the step a).

It is preferred that the semantic service method further comprise the steps of, if an ontology reference API exists, the semantic service management server further collecting the ontology reference API and separately storing the collected ontology reference API, and

if an ontology reference API does not exist, the semantic service management server storing relevant instance information itself.

It is preferred that the semantic service method further comprise

the step of the semantic service license server requesting ontology information through the semantic broker server, receiving the ontology information from the semantic service management server, and incorporating the received ontology information into items, before the step a).

It is preferred that the semantic service method further comprise the step of the semantic service license server requesting ontology information through the semantic broker server at a request of the user and receiving the ontology information from the semantic service management server, in order to incorporate the ontology information into the items for inputting the condition.

It is preferred that the step c) step

further comprise the step of the semantic service license server outputting optional items including at least one or more of a visualization type, semantic services, and a property so that factors for optional items are inputted.

It is preferred that, after the step e),

the semantic service method further comprise the step of, if a factor other than classes, from among the factors of the semantic service pipelines outputted from the semantic service license server, is changed by the user, the semantic service license server requesting the semantic broker server to execute a semantic service pipeline into which the changed factor has been incorporated again.

It is preferred that, after the step e),

the semantic service method further comprise the step of, if an execution of a specific semantic service, from among a plurality of semantic services forming the semantic service pipelines outputted from the semantic service license server, is requested by the user, the semantic service license server requesting the semantic broker server to execute the specific semantic services again.

It is preferred that, after the step e),

the semantic service method further comprise the step of, if an execution of another semantic service pipeline other than semantic service pipelines previously executed, from among the semantic service pipelines outputted from the semantic service license server, is requested by the user, the semantic service license server requesting the semantic broker server to execute the relevant semantic service pipeline again.

Yet another aspect of the present invention provides a semantic service method of a semantic service management server, performing communication with a semantic broker server, providing ontology-based semantic services, the semantic service method comprising the steps of:

a) the semantic service management server collecting and registering pieces of ontology-based semantic service information and ontology distributed among a plurality of service servers and registering; and

b) the semantic service management server supporting search of the semantic broker server for ontology information or semantic service information.

It is preferred that the a) step

the semantic service method further comprises the step of the semantic service management server further collecting an ontology reference API and separately storing the collected ontology reference API, if the ontology reference API exists, and

the semantic service management server storing relevant instance information itself, if an ontology reference API does not exist.

### [Advantageous Effects]

As described above, the semantic service system and method of the present invention may expect an effect that it can provide an interface through which a user can freely search and select ontology, automatically combine semantic services based on the ontology, and interact with combined semantic services or semantic workflows in order to combine ontology-based semantic services.

Furthermore, the present invention is advantageous in that it can support a technical aspect in creating new semantic services through a combination of ontology-based semantic services.

### [Description of Drawings]

FIG. 1 is a diagram showing the construction of a semantic service system according to the present invention,

FIG. 2 is a diagram for illustrating a method of providing semantic service results according to the present invention,

FIG. 3 is a diagram showing the construction of a semantic service management server according to the present invention,

FIG. 4 is a diagram for illustrating a method of registering semantic services according to the present invention,

FIG. 5 is a diagram showing the construction of a semantic service license server according to the present invention,

FIG. 6 is a diagram for illustrating a method of inputting conditions according to the present invention,

FIG. 7 is a diagram for illustrating a combination of semantic services according to the present invention,

FIG. 8 is a flowchart illustrating a semantic service method according to the present invention, and

FIG. 9 is a flowchart illustrating the operation of a semantic broker management server according to the present invention.

<Description of reference numerals of principal elements in the drawings>

100: semantic service management server 110, 310: interface unit

130: semantic service management unit 150: ontology integration management unit

170: semantic service repository 200: semantic broker server

300: semantic service license server 330: semantic service condition input unit

350: semantic service result output unit 400: service server

### [Mode for Invention]

Preferred embodiments of the present invention are described in detail with reference to the accompanying drawings.

Semantic service disclosed in the present invention is defined as service in which ontology information is used as an input factor (parameter) and an output factor and the ontology information is utilized for providing service.

Here, the ontology information of the input factor is essential, and the ontology information of the output factor is optional. Furthermore, a search API includes the ontology information in the input factor, but does not utilize the output factor or the ontology information.

Meanwhile, not the ontology, but a common API may also be used as the input factor and the output factor according to the necessity of an operator.

For example, ontology-based semantic services use semantic information in the input factor and output results. In case of semantic service that finds experts for specific research subjects, a Uniform Resource Identifier (URI) that is an ontology standard identification system is used as the input factor, and identifiers are provided as the output results using the URI.

Here, ontology is a specification that is explicitly standardized in order to provide a concept for any interest field, and the ontology includes an ontology schema and ontology instances.

The ontology instance means a real value or an entity that is matched with ontology classes, and the ontology classes mean a concept from among elements forming the ontology schema.

Furthermore, the instance means a real value or an entity that is matched with a class.

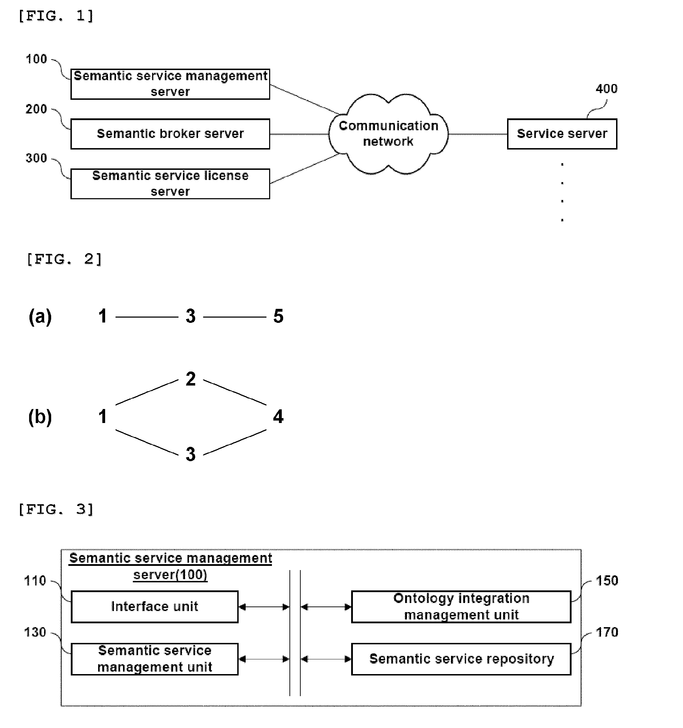

First, FIG. 1 is a diagram showing the construction of a semantic service system according to the present invention.

The semantic service system according to the present invention includes a semantic service management server 100, a semantic broker server 200, and a semantic service license server 300.

More particularly, the semantic service management server 100 registers, deletes, edits ontology-based semantic service information and ontology and supports information search performed by the semantic broker server 200.

Here, the semantic service information includes a semantic service name, an input item, an output item, properties, a visualization type, reference ontology, and a service specification.

The semantic service management server 100 also collects ontology reference Application Programming Interfaces (APIs) and stores the collected ontology reference APIs in an additional repository.

If an ontology reference API does not exist, the semantic service management server 100 stores relevant instance information itself.

The semantic broker server 200 searches for and combines semantic services through the semantic service management server 100 and provides results as any one of a combined semantic service or a semantic workflow.

Here, the combined semantic service has a simple combination form of a plurality of semantic services as shown in FIG. 2(a). The semantic workflow has a form in which No. 1 is simultaneously transmitted and combined into No. 4 through a specific condition (for example, if sentence) as shown in FIG. 2(b).

More particularly, the semantic broker server 200 transfers a condition, received from the semantic service license server 300, to the semantic service management server 100 based on the condition, receives one or more semantic services matched with the condition, and generates semantic service pipelines by combining the semantic services.

The semantic service pipelines are composed of an ontology-based API. When a request to execute a specific semantic service pipeline is received from the semantic service license server 300, the semantic broker server 200 obtains information from a relevant service server that includes ontology-based API information about the specific semantic service pipeline.

When a user inputs a condition, including an input factor, according to a preset item, the semantic service license server 300 requests a result by transmitting the relevant condition to the semantic broker server 200 and receives and outputs a relevant result.

More particularly, when the semantic service license server 300 transmits the condition to the semantic broker server 200, the semantic broker server 200 generates semantic service pipelines matched with the condition and transmits the semantic service pipelines to the semantic service license server 300.

Furthermore, the semantic service license server 300 requests the semantic broker server 200 to executed a specific semantic service pipeline from among a plurality of the semantic service pipelines and receives a result of the execution.

Here, the result of the execution of the specific semantic service pipeline is any one of a graph form, a group form, a grid form, a list form, a map form, a browsing form, a tag cloud form, and a tree form.

FIG. 3 is a diagram showing the construction of the semantic service management server according to the present invention.

As shown, the semantic service management server 100 includes an interface unit 110, a semantic service management unit 130, an ontology integration management unit 150, and a semantic service repository 170.

More particularly, the interface unit 110 provides an interface so that a user can manipulate the semantic service management server, including the semantic service management unit 130, the ontology integration management unit 150, and the semantic service repository 170.

The semantic service management unit 130 collects pieces of ontology-based semantic service information and ontology from a plurality of service servers 400, registers the pieces of ontology-based semantic service information and ontology with the semantic service repository or the ontology integration management unit, and manages them.

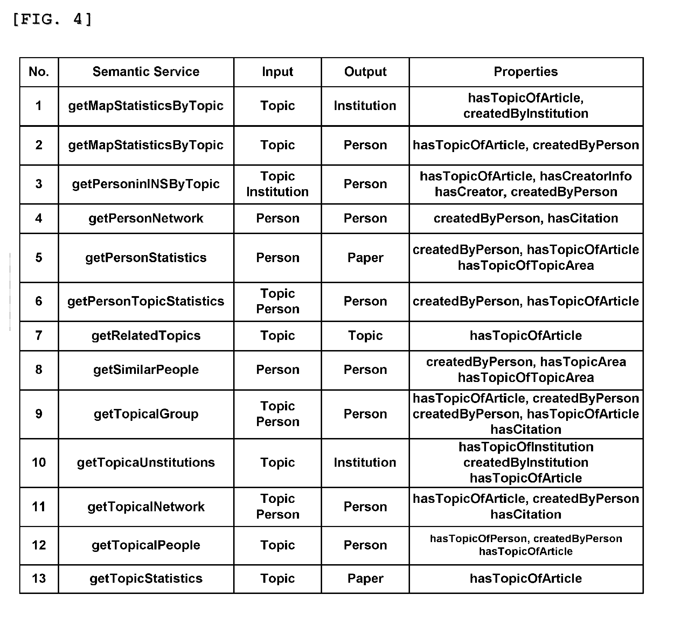

Here, the pieces of semantic service information collected by the semantic service management unit 130 include a semantic service name Semantic Service, an input item Input, an output item Output, and properties Properties, as shown in FIG. 4 and, although not shown, further include a visualization type, reference ontology, a service specification, etc.

The property means a relationship between entities (classes or concepts) on the ontology. The visualization type means a form that the semantic service is finally seen. The reference ontology means ontology for which reference is made when the semantic service performs a specific task. The service specification means a specification that describes the semantic service.

The semantic service management unit 130 further collects an ontology reference Application Programming Interface (API).

The ontology integration management unit 150 registers and integrates pieces of ontology that are collected by the semantic service management unit 130 and distributed among the plurality of service servers 400, supports reference to the integrated ontology when semantic service is registered, deleted, and edited, and supports information search performed by the semantic broker server 200.

If the semantic service management unit 130 further searches for an ontology reference Application Programming Interface (API), the ontology integration management unit 150 includes an additional repository (not shown) for storing an ontology reference API.

If an ontology reference API exists, the ontology integration management unit 150 stores the ontology reference API in an additional repository. If an ontology reference API does not exist, the ontology integration management unit 150 stores relevant instance information itself.

The semantic service repository 170 stores the pieces of semantic service information collected by the semantic service management unit 130 and supports search performed by the semantic broker server 200.

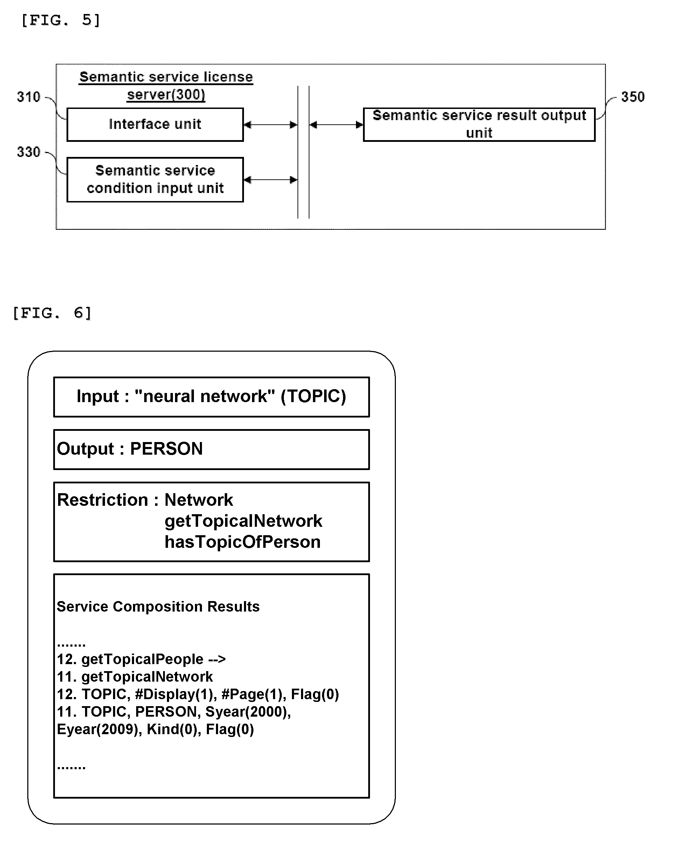

FIG. 5 is a diagram showing the construction of the semantic service license server according to the present invention.

As shown, the semantic service license server 300 includes an interface unit 310, a semantic service condition input unit 330, and a semantic service result output unit 350.

More particularly, the interface unit 310 enables information, including a specific condition, to be inputted to the semantic service license server 300 including the semantic service condition input unit 330 and the semantic service result output unit 350 and enables information to be requested and received through the semantic service management server 100 and the semantic broker server 200.

The semantic service condition input unit 330 provides service so that a condition can be inputted according to preset essential items and preset optional items.

Here, the essential items are items for enabling an input factor and an output factor to be inputted, and the optional items are items for enabling at least one or more of visualization types, semantic services, and properties to be inputted.

The visualization type is any one of a graph form, a group form, a grid form, a list form, a map form, a browsing form, a tag cloud form, and a tree form.

For example, as shown in FIG. 6, the semantic service condition input unit 330 outputs essential items (Input, Output) for enabling "neural network" that is an input factor and PERSON that is an output factor to be inputted and an optional item for enabling various restriction conditions (Network, getTopicalNetwork, hasTopicOfPerson) to be inputted so that a relevant factor can be inputted.

Furthermore, the semantic service condition input unit 330 requests ontology information from the semantic broker server 200 and receives the ontology information from the semantic broker server 200, before outputting items for inputting a condition, incorporates the received ontology information into items, and outputs the items.

The semantic service result output unit 350 requests a result matched with a condition, inputted by the semantic service condition input unit 330, from the semantic broker server 200 by transmitting the condition to the semantic broker server 200, receives the matched result from the semantic broker server 200, and outputs the result.

More particularly, the semantic service result output unit 350 outputs semantic service pipelines matched with the condition transmitted by the semantic broker server 200, requests the semantic broker server 200 to execute a specific semantic service pipeline selected by a user, receives a requested result, and outputs the received result.

Here, an example of the specific semantic service pipeline has a form in which an API 12 and an API 11 are combined as shown on the lower side (Service Composition Results box of FIG. 6.

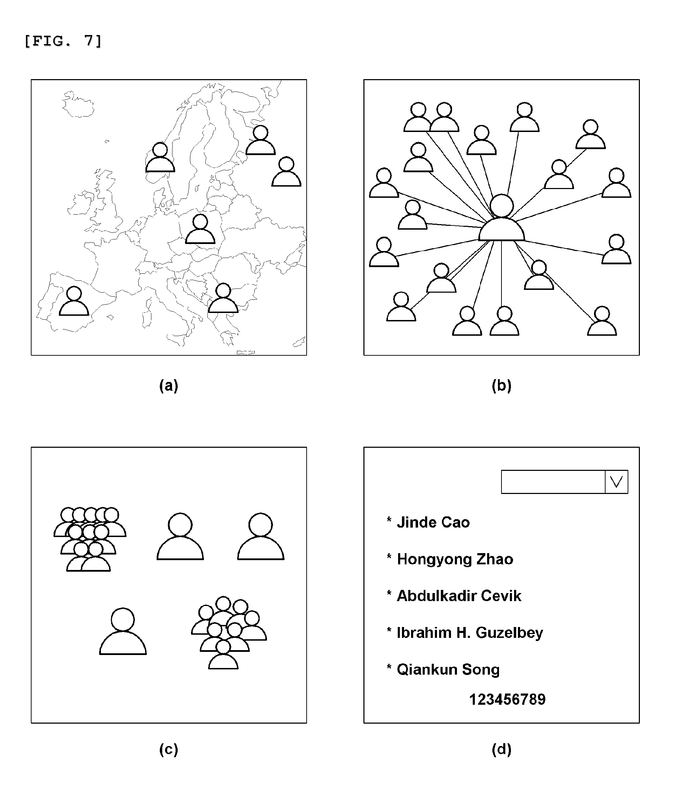

Furthermore, a result of the execution of the specific semantic service pipeline is determined according to a visualization type (any one of a graph form, a group form, a grid form, a list form, a map form, a browsing form, a tag cloud form, and a tree form), and an example thereof is shown in FIG. 7.

FIG. 7(a) has a map form, FIG. 7(b) has a network form, FIG. 7(c) has a group form, and FIG. 7(d) has a list form.

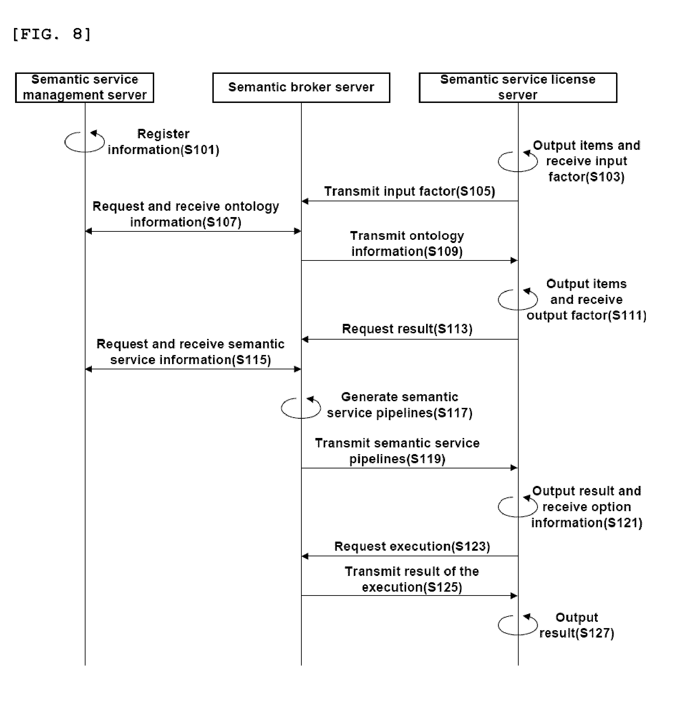

FIG. 8 is a flowchart illustrating a semantic service method according to the present invention.

First, the semantic service management server 100 collects pieces of ontology-based semantic service information and ontology distributed among the plurality of service servers 400 and registers the pieces of ontology-based semantic service information and ontology (S101).

If an ontology reference API exists, the semantic service management server 100 further collects the ontology reference API and separately stores the collected ontology reference API. If the ontology reference API does not exist, the semantic service management server 100 stores relevant instance information itself.

Next, the semantic service license server 300 outputs a preset item so that an input factor can be inputted and requests classes and instances matched with an input factor, inputted by a user, by transmitting the input factor to the semantic broker server (S103, S105).

Before the step S103, the semantic service license server 300 requests ontology information from the semantic service management server 100 through the semantic broker server 200, receives the ontology information from the semantic service management server 100, and incorporates the received ontology information into an item. Even not before the step S103, the semantic service license server 300 may request ontology information from the semantic broker server 200 and receive the ontology information from the semantic service management server 100 at the request of a user in order to incorporate the ontology information into items for inputting a condition.

In response to the request received from the semantic service license server 300, the semantic broker server 200 requests class and instance information, matched with the input factor, from the semantic service management server 100, receives the class and instance information from the semantic service management server 100, and transmits the received class and instance information to the semantic service license server 300 (S107 to S111).

Next, the semantic service license server 300 outputs a preset item so that an output factor can be inputted and requests a result matched with a condition, including the input factor and the output factor, from the semantic broker server 200 by transmitting the condition to the semantic broker server 200 (S113).

Here, the semantic service license server 300 further outputs an optional item including at least one or more of a visualization type, a semantic service, and a property so that a factor for am optional item can be inputted.

The semantic broker server 200 requests semantic service information, matched with the condition, from the semantic service management server 100, receives the requested semantic service information from the semantic service management server 100, generates semantic service pipelines based on the received semantic service information, and transmits the generated semantic service pipelines to the semantic service license server 300 (S115 to S119).

Here, the condition transmitted from the semantic broker server 200 to the semantic service management server 100 is a class. The semantic service management server 100 searches for an ontology-based API (semantic services) matched with the received class and provides the matched ontology-based API.

The semantic service license server 300 outputs the semantic service pipelines received from the semantic broker server 200 so that the user can check the semantic service pipelines and requests the semantic broker server 200 to execute a semantic service pipeline selected by the user (S121, S123).

The semantic broker server 200 receives a result from a relevant service server by calling the API of the semantic service pipeline that has been requested to be executed by the semantic service license server 300 and transmits a relevant result to the semantic service license server 300 (S125).

The semantic service license server 300 outputs the result received from the semantic broker server 200 (S127).

Meanwhile, if a factor other than the class, from among the factors of semantic service pipeline outputted from the semantic service license server 300, is changed by a user, the semantic service license server 300 requests the semantic broker server 200 to execute a semantic service pipeline into which the changed factor has been incorporated again.

On the other hand, if the execution of a specific semantic service, from among a plurality of semantic services forming the semantic service pipeline outputted from the semantic service license server 300, is requested by a user, the semantic service license server 300 requests the semantic broker server 200 to execute the specific semantic service again.

Furthermore, if the execution of another semantic service pipeline other than a semantic service pipeline previously executed, from among semantic service pipelines outputted from the semantic service license server 300, is requested by a user, the semantic service license server 300 requests the semantic broker server 200 to executed the relevant semantic service pipeline again.

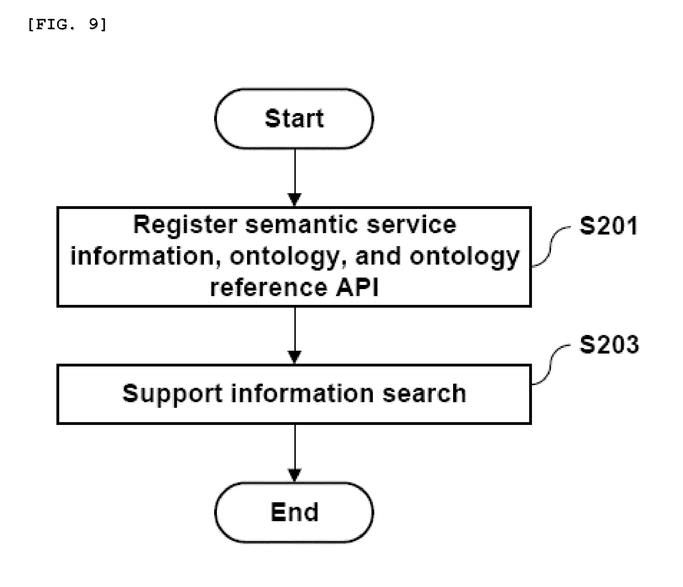

FIG. 9 is a flowchart illustrating the operation of the semantic broker management server according to the present invention.

First, the semantic service management server 100 collects pieces of ontology-based semantic service information and ontology distributed among the plurality of service servers 300 and registers the pieces of ontology-based semantic service information and ontology (S201).

Here, if an ontology reference API exists, the semantic service management server 300 further collects the ontology reference API and separately stores the collected ontology reference API. If an ontology reference API does not exist, the semantic service management server 300 stores relevant instance information itself.

Next, the semantic service management server 100 supports search for ontology information or semantic service information by the semantic broker server 200 (S203).

More particularly, the semantic service management server 100 searches for ontology information and provides the retrieved ontology information or searches for semantic service having an API form matched with a condition (class) and provides the retrieved semantic service at the request of the semantic broker server 200.

As described above, those having ordinary skill in the art to which the present invention pertains will appreciate that the present invention may be implemented in other detailed forms without changing the technical spirit or indispensable characteristics. Accordingly, it should be understood that the above embodiments are only illustrative from all aspects and are not to be restrictive. The scope of the present invention is defined by the following claims rather than the detailed description, and the meanings and scope of the claims and all changes or modified forms induced from their equivalents should be interpreted to fall within the scope of the present invention.

## Claims

1. A semantic service system, comprising:
a semantic service management server for registering, deleting, and editing pieces of ontology-based semantic service information and ontology and supporting information search performed by a semantic broker server;
a semantic broker server for searching for and combining semantic services through the semantic service management server and providing a result as any one of a combined semantic service or a semantic workflow; and
a semantic service license server for requesting a result by transmitting a condition, including an input factor, to the semantic broker server when a user inputs the input factor according to a preset item, receiving the relevant result from the semantic broker server, and outputting the relevant result.

2. The semantic service system according to claim 1, wherein the semantic service management server comprises:
a semantic service management unit for collecting the pieces of ontology-based semantic service information and ontology from a plurality of service servers, registering the pieces of ontology-based semantic service information and ontology with a semantic service repository or an ontology integration management unit, and managing the pieces of ontology-based semantic service information and ontology;
an ontology integration management unit for registering and integrating the pieces of ontology, distributed among the respective service servers and which is collected by the semantic service management unit, supporting reference to the integrated ontology when the semantic services are registered, deleted, and edited, and supporting the information search of the semantic broker server; and
a semantic service repository for storing the pieces of semantic service information collected by the semantic service management unit and supporting the search of the semantic broker server.

3. The semantic service system according to claim 2, wherein:
the semantic service management unit further collects ontology reference Application Programming Interface (API),
the ontology integration management unit comprises an additional repository for the ontology reference API, and
stores the ontology reference API in the additional repository if the ontology reference API exists and stores relevant instance information itself if the ontology reference API does not exist.

4. The semantic service system according to claim 3, wherein the semantic service information comprises a semantic service name, an input item, an output item, a property, a visualization type, reference ontology, and a service specification.

5. The semantic service system according to claim 4, wherein the semantic service management server further comprises an interface unit for providing an interface so that the user can manipulate the semantic service management server, comprising the semantic service management unit, the ontology integration management unit, and the semantic service repository.

6. The semantic service system according to claim 1, wherein the semantic service license server comprises:
a semantic service condition input unit for providing service so that the condition can be inputted according to preset essential items and optional items; and
a semantic service result output unit for requesting the result, matched with the condition inputted by the semantic service condition input unit, by transmitting the condition to the semantic broker server, receiving the result from the semantic broker server, and outputting the result.

7. The semantic service system according to claim 6, wherein the semantic service license server further comprises an interface unit for enabling information, including a specific condition, to be inputted to the semantic service license server including the semantic service condition input unit and the semantic service result output unit and for enabling the information to be requested and received through the semantic service management server and the semantic broker server.

8. The semantic service system according to claim 7, wherein the semantic service condition input unit requests ontology information from the semantic broker server before outputting items for inputting the condition, receives the ontology information from the semantic broker server, and incorporates the received ontology information into the items.

9. The semantic service system according to claim 8, wherein the essential items are items for inputting an input factor and an output factor.

10. The semantic service system according to claim 8, wherein the optional items comprise at least one or more of a visualization type, a semantic service, and a property.

11. The semantic service system according to claim 10, wherein the visualization type is any one of a graph form, a group form, a grid form, a network form, a list form, a map form, a browsing form, a tag cloud form, and a tree form.

12. The semantic service system according to claim 8, wherein when the condition is received from the semantic service license server, the semantic broker server transmits the condition to the semantic service management server, receives semantic services matched with the condition, generates semantic service pipelines by combining the received semantic services, and transmits the semantic service pipelines to the semantic service license server.

13. A semantic service management server coupled to a semantic broker server and configured to support semantic services, the semantic service management server comprising:
a semantic service management unit for collecting pieces of ontology-based semantic service information and ontology from a plurality of service servers, registering the pieces of ontology-based semantic service information and ontology with a semantic service repository or an ontology integration management unit, and managing the pieces of ontology-based semantic service information and ontology;
an ontology integration management unit for registering and integrating the pieces of ontology, distributed among the respective service servers which is collected by the semantic service management unit, supporting reference to the integrated ontology when semantic services are registered, deleted, and edited, and supporting information search performed by the semantic broker server; and
a semantic service repository for storing the pieces of semantic service information collected by the semantic service management unit and supporting the search of the semantic broker server.

14. The semantic service management server according to claim 13, wherein:
the semantic service management unit further collects ontology reference Application Programming Interface (API),
the ontology integration management unit comprises an additional repository for the ontology reference API, and
the ontology integration management unit stores the ontology reference API in the additional repository when the ontology reference API exists and stores relevant instance information itself when the ontology reference API does not exist.

15. The semantic service management server according to claim 14, wherein the semantic service information comprises a semantic service name, an input item, an output item, a property, a visualization type, reference ontology, and a service specification.

16. The semantic service management server according to claim 15, wherein the semantic service management server further comprises an interface unit for providing an interface so that a user can manipulate the semantic service management server, comprising the semantic service management unit, the ontology integration management unit, and the semantic service repository.

17. A semantic service license server coupled to a semantic broker server and configured to provide semantic service matched with a condition inputted by a user, the semantic service license server comprising:
a semantic service condition input unit for providing service so that the condition can be inputted according to preset essential items and optional items; and
a semantic service result output unit for requesting a result, matched with the condition inputted by the semantic service condition input unit, by transmitting the condition to the semantic broker server, receiving the result from the semantic broker server, and outputting the result.

18. The semantic service license server according to claim 17, wherein the semantic service license server further comprises an interface unit for enabling information, including a specific condition, to be inputted to the semantic service license server including the semantic service condition input unit and the semantic service result output unit and for enabling the information to be requested and received through the semantic service management server and the semantic broker server.

19. The semantic service license server according to claim 18, wherein the semantic service condition input unit requests ontology information from the semantic broker server before outputting items for inputting the condition, receives the ontology information from the semantic broker server, and incorporates the received ontology information into the items.

20. The semantic service license server according to claim 19, wherein the essential items are items for inputting an input factor and an output factor.

21. The semantic service license server according to claim 19, wherein the optional items comprise at least one or more of a visualization type, a semantic service, and a property.

22. The semantic service license server according to claim 21, wherein the visualization type is any one of a graph form, a group form, a grid form, a network form, a list form, a map form, a browsing form, a tag cloud form, and a tree form.

23. A semantic service method of a system, comprising a semantic service management server, a semantic broker server, and a semantic service license server, providing ontology-based semantic services, the semantic service method comprising the steps of:
a) the semantic service license server outputting preset items so that an input factor is inputted and requesting classes and instances matched with an input factor inputted by a user by transmitting the input factor to the semantic broker server;
b) the semantic broker server requesting class and instance information, matched with the input factor, from the semantic service management server when the request is received from the semantic service license server, receiving the class and instance information from the semantic service management server, and transmitting the received class and instance information to the semantic service license server;
c) the semantic service license server outputting the preset items so that an output factor is inputted and requesting a result matched with a condition, including the input factor and the output factor, by transmitting the condition to the semantic broker server;
d) the semantic broker server requesting semantic service information, matched with the condition, from the semantic service management server, receiving the semantic service information from the semantic service management server, generating semantic service pipelines based on the received semantic service information, and transmitting the semantic service pipelines to the semantic service license server;
e) the semantic service license server outputting the semantic service pipelines received from the semantic broker server so that the user can check the semantic service pipelines and requesting the semantic broker server to execute a semantic service pipeline selected by the user;
f) the semantic broker server receiving an API of the semantic service pipeline, requested to be executed by the semantic service license server, from the relevant service server by calling the API and transmitting a relevant result to the semantic service license server; and
g) the semantic service license server outputting the relevant result received from the semantic broker server.

24. The semantic service method according to claim 23, further comprising the step of the semantic service management server collecting pieces of ontology-based semantic service information and ontology distributed among a plurality of service servers and registering the pieces of ontology-based semantic service information and ontology, before the step a).

25. The semantic service method according to claim 24, further comprising the steps of:
if an ontology reference API exists, the semantic service management server further collecting the ontology reference API and separately storing the collected ontology reference API, and
if an ontology reference API does not exist, the semantic service management server storing relevant instance information itself.

26. The semantic service method according to claim 23, further comprising the step of the semantic service license server requesting and receiving ontology information through the semantic broker server from the semantic service management server, and incorporating the received ontology information into items, before the step a).

27. The semantic service method according to claim 23, further comprising the step of the semantic service license server requesting and receiving ontology information through the semantic broker server from the semantic service management server, in order to incorporate the ontology information into the items for inputting the condition at a request of the user.

28. The semantic service method according to claim 23, wherein the step c) further comprises the step of the semantic service license server outputting optional items including at least one or more of a visualization type, semantic services, and a property so that factors for optional items are inputted.

29. The semantic service method according to claim 23, further comprising the step of, if a factor other than classes, from among the factors of the semantic service pipelines outputted from the semantic service license server, is changed by the user, the semantic service license server requesting the semantic broker server to execute a semantic service pipeline into which the changed factor has been incorporated again, after the step e).

30. The semantic service method according to claim 23, further comprising the step of, if an execution of a specific semantic service, from among a plurality of semantic services forming the semantic service pipelines outputted from the semantic service license server, is requested by the user, the semantic service license server requesting the semantic broker server to execute the specific semantic services again, after the step e).

31. The semantic service method according to claim 23, further comprising the step of, if an execution of another semantic service pipeline other than semantic service pipelines previously executed, from among the semantic service pipelines outputted from the semantic service license server, is requested by the user, the semantic service license server requesting the semantic broker server to execute the relevant semantic service pipeline again, after the step e).

32. A semantic service method of a semantic service management server, performing communication with a semantic broker server, providing ontology-based semantic services, the semantic service method comprising the steps of:
a) the semantic service management server collecting and registering pieces of ontology-based semantic service information and ontology distributed among a plurality of service servers; and
b) the semantic service management server supporting search of the semantic broker server for ontology information or semantic service information.

33. The semantic service method according to claim 32, further comprising the step of the semantic service management server further collecting an ontology reference API and separately storing the collected ontology reference API, if the ontology reference API exists, and the semantic service management server storing relevant instance information itself, if an ontology reference API does not exist, at the step a).

34. A semantic service method of a semantic service license server, performing communication with a semantic broker server, providing ontology-based semantic services, the semantic service method comprising the steps of:
a) the semantic service license server outputting preset items so that an input factor is inputted and requesting classes and instances, matched with an input factor inputted by a user, by transmitting the input factor to the semantic broker server;
b) the semantic service license server receiving class and instance information, matched with the input factor, from the semantic broker server;
c) the semantic service license server outputting the preset items so that an output factor is inputted and requesting a result, matched with a condition including the input factor and the output factor, by transmitting the condition to the semantic broker server;
d) the semantic service license server outputting semantic service pipelines transmitted by the semantic broker server so that the user can check the semantic service pipelines and requesting the semantic broker server to execute a semantic service pipeline selected by the user; and
e) the semantic service license server outputting a result transmitted by the semantic broker server.

35. The semantic service method according to claim 34, further comprising the step of the semantic service license server requesting and receiving ontology information through the semantic broker server from the semantic service management server, and incorporating the received ontology information into items, before the step a) step.

36. The semantic service method according to claim 34, further comprising the step of the semantic service license server requesting and receiving ontology information through the semantic broker server from a semantic service management server, in order to incorporate the ontology information into the items for inputting the condition at a request of the user.

37. The semantic service method according to claim 34, further comprising the step of, if a factor other than classes, from among the factors of the semantic service pipelines outputted from the semantic service license server, is changed by the user, the semantic service license server requesting the semantic broker server to execute a semantic service pipeline into which the changed factor has been incorporated again, after the step e).

38. The semantic service method according to claim 34, further comprising the step of, if an execution of a specific semantic service, from among a plurality of semantic services forming the semantic service pipelines outputted from the semantic service license server, is requested by the user, the semantic service license server requesting the semantic broker server to execute the specific semantic services again, after the step e).

39. The semantic service method according to claim 34, further comprising the step of, if an execution of another semantic service pipeline other than semantic service pipelines previously executed, from among the semantic service pipelines outputted from the semantic service license server, is requested by the user, the semantic service license server requesting the semantic broker server to execute the relevant semantic service pipeline again, after the step e).
